# EUROPEAN PATENT SPECIFICATION

(11) **EP 0 675 274 B1**
(45) Date of publication and mention of the grant of the patent: **13.05.1998**
(21) Application number: 95102283.9
(22) Date of filing: 17.02.1995
(51) Int. Cl.: F02B 31/06, F02F 1/42

(54) **Internal combustion engine**
Brennkraftmaschine
Moteur à combustion interne

(30) Priority: 17.02.1994 JP 20171/94
(43) Date of publication of application: 04.10.1995
(73) Proprietor: YAMAHA HATSUDOKI KABUSHIKI KAISHA, Iwata-shi Shizuoka-ken, 438 (JP)
(72) Inventor: Aoyama, Takeo, Iwata-shi, Shizuoka-ken, 438 (JP); Uchida, Masahiro, Iwata-shi, Shizuoka-ken, 438 (JP)
(74) Representative: Grünecker, Kinkeldey, Stockmair & Schwanhäusser Anwaltssozietät

(56) References cited:
- EP-A- 0 449 240
- EP-A- 0 500 123
- DE-A- 3 600 408
- DE-A- 4 108 469
- US-A- 4 570 590
- US-A- 4 617 896
- US-A- 4 627 400
- US-A- 4 667 636
- US-A- 5 119 784
- PATENT ABSTRACTS OF JAPAN vol. 11 no. 114 (M-579) ,10 April 1987 & JP-A-61 258921 (KUBOTA LTD.) 17 November 1986,
- PATENT ABSTRACTS OF JAPAN vol. 9 no. 245 (M-418) ,2 October 1985 & JP-A-60 098125 (MAZDA K.K.) 1 June 1985,
- PATENT ABSTRACTS OF JAPAN vol. 10 no. 181 (M-492) ,25 June 1986 & JP-A-61 028714 (FUJI HEAVI IND LTD) 8 February 1986,
- PATENT ABSTRACTS OF JAPAN vol. 12 no. 39 (M-665) ,5 February 1988 & JP-A-62 191624 (NISSAN MOTOR CO LTD) 22 August 1987,
- PATENT ABSTRACTS OF JAPAN vol. 9 no. 326 (M-441) ,21 December 1985 & JP-A-60 159334 (MAZDA KK) 20 August 1985,
- PATENT ABSTRACTS OF JAPAN vol. 11 no. 318 (M-632) ,16 October 1987 & JP-A-62 101822 (HONDA MOTOR CO LTD) 12 May 1987,

## Description

This invention relates to an internal combustion engine comprising a cylinder unit with at least one cylinder bore defined therein, and an intake passage arrangement with a plurality of intake valves associated therewith for supplying intake air to said cylinder bore, said intake passage arrangement being provided with control valve means for controlling the flow of intake air towards said intake valves, whereby said control valve means are provided for controlling the flow of intake air towards at least one of the intake valves separately from the flow of intake air towards at least another one of said intake valves, wherein the first intake passage for supplying intake air towards a pair of intake valves and the second intake passage for supplying intake air towards another intake valve being divided from each other by a partitioning wall, said control valve means includes a first control valve for controlling the intake air flow through said first intake passage and a second control valve for controlling the intake air flow through said second intake passage.

It is a known fact that the generation of a vertical tumble or a horizontal swirl for the air intake flow into an engine's cylinders improves its combustion characteristics, particularly during low RPM operations. Air intake control devices of the prior art have for example divided the air intake passage by means of a partitioning wall into a ceiling-side top passage and a bottom wall-side bottom passage and then used a tumble valve to fully close the bottom passage. In such conventional devices, during periods of low air intake, the tumble valve would be used to close the bottom passage, causing the intake air to be introduced from the top passage into the cylinder in a vertical direction, thereby generating a tumbling action therein.

One example for such an air intake control device is known from DE-OS 41 08 469 Al which discloses an internal combustion engine according to the preamble of claim 1.

Additionally, further examples of air intake control devices that generated the above mentioned swirl include those disclosed in Japan Patent Application Publications Sho 60-159334 and Sho 62-101822, wherein a partitioning wall was used in the air intake passage to divide it into left and right sides; for cases of two, namely a left and right air intake valve openings, a swirl valve would be mounted to open and close one of the passages. Thus, in the prior art, during periods of low air-intake requirements, the one passage would be closed by the swirl valve, and a swirl along the inner circumference of the cylinder would be generated by the air inflow from the other passage.

In the case of the above described tumble-generating air intake control device of the prior art, the best way to generate a tumbling action is to narrow the passage at the ceiling side to increase the air flow speed. However, with this method, because it increases the air intake resistance when the engine has low air-intake requirements, there are limits to the degree to which the passage can be narrowed on the ceiling side. In the case where a plurality of air intake valve openings are being supplied, there is interference in the air inflow among the various air intake openings.

In the case of the above described air intake control device of the prior art which generates swirls, the optimal method is to increase the air flow speed by narrowing the other air intake passage cross section, the one without the swirl valve. However, the above described method causes increased air intake resistance in the other passage during engine operation that require high air intake volumes, and it becomes difficult to assure an adequate air intake volume.

It is therefore an objective of the present invention to provide an improved internal combustion engine having an intake control arrangement that permits an improved generation of a tumble or swirl without increasing air resistance.

According to the present invention, this objective is performed in that said pair of intake valves includes a first side intake valve and a center intake valve and said other intake valve is a second side intake valve, a part of the first intake passage is left open when the first control valve is in its fully closed position during engine operating conditions having low intake air requirements, and that under low intake air requirements the second control valve is in its fully closed position closing said second intake passage totally.

Accordingly the flow of intake air into the combustion chamber can be subtly diversified in order to adapt the flow pattern created in the cylinder bore to the requirements of different engine operating conditions.

Therefore, the second control valve closes the second passage during periods of low air-intake demand, and in addition the first control valve is adapted to open only at the ceiling side or
the outer wall side of the first passage so that the intake air is diverted toward the ceiling or outer wall side of the first passage. An air intake flow that has been diverted toward the ceiling enters the cylinder vertically and generates a tumble. Or, an air intake flow that has been diverted toward the outside wall enters the cylinder in the inner circumferential direction and generates a swirl.

To generate a tumble, the second passage is closed, and further, the first passage is closed except for an area near the passage ceiling to assure a strong tumble without having to narrow the first passage. This method avoids the problem of increased air intake resistance associated with the method of prior art that used a narrow ceiling-side air intake passage to increase tumbling during periods of low volume air intake. Also, since air intake is introduced into just a part of a plurality of air intake valve openings, interference among the various air intake flows is additionally avoided.

Also, when a swirl is to be generated, the second passage is closed, and the first passage is closed except for an area near the outside wall thereby assuring swirl generation without narrowing the first passage. Accordingly, this method avoids the problem of increased air intake resistance associated with the method of the prior art that employed one passage narrower than the other.

According to further preferred embodiment of the present invention, an injection valve unit is provided for injecting fuel into said first intake passage, while the second intake passage is provided for supplying intake air only into the cylinder bore.

According to yet another preferred embodiment, the control valves comprise a valve plate each, which is affixed to a valve shaft that is rotatably supported in the cylinder unit and extends through the first and second intake passage respectively.

Preferably, the control valves are disposed aligned with each other, in particular such that the valve shaft of the first control valve extends coaxially to the valve shaft of the second control valve, one of said valve shafts being rotatably received within a bore formed in the other valve shaft provided with a recess for the valve plate of said one valve shaft. In comparison with two valve shafts inside the air intake passages, the coaxial arrangement of the valve shafts considerably reduces air intake resistance when the control valves are in their opened position, thereby improving high-speed performance of the engine.

According to another preferred embodiment, the control valves are disposed staggered with respect to each other, with the valve shafts extending in parallel with each other. Thereby any restrictions up on the respective angle of rotation of the control valves are avoided. Also, since the first control valve which generates a tumble or swirl is preferably positioned on the downstream side, there is no reduction in the air flow pushed towards the ceiling or the outer wall by the control valve until the flow reaches the air intake valve opening.

According to a further preferred embodiment of the present invention, the first control valve comprises a cylindrical valve unit having a notched surface that conforms to the cross-section of the first intake passage, said cylindrical valve unit being rotatably supported, such that it is fully received in an intake passage wall of said first intake passage, when it is in its fully opened position and that the first intake passage is totally closed except of an upper portion left open, when said first control valve is in its closing position. Since the valve according to this embodiment lies completely buried when it is in its fully opened position, so that no flow restriction remains in the intake passage, the air intake resistance is considerably reduced when the valve is fully opened.

Further preferred embodiments of the present invention are laid down in the dependent claims.

Hereinafter, the present invention is illustrated and explained in greater detail by means of preferred embodiments of the invention in conjunction with accompanying drawings, wherein:
Fig. 1 is a front view of an internal combustion engine comprising an air intake control device according to a preferred embodiment of the present invention;
Fig. 2 is a sectional front view of the engine according to the embodiment of fig. 1;
Fig. 3 is a partial sectional top view of the intake passage arrangement formed in a cylinder head of the engine comprising three intake valves and a pair of intake control valves provided in a pair of intake passages of the engine according to the foregoing first embodiment;
Fig. 4 is a top view of the foregoing first embodiment of the engine showing an intake manifold device disposed between the pair of cylinder banks shown in fig. 1;
Fig. 5 is a side sectional view along line V-V of fig. 4 of the foregoing first embodiment of the internal combustion engine;
Fig. 6 is a bottom view of the air intake manifold device according to the foregoing first embodiment;
Fig. 7 is a top view of the valve unit showing a plurality of first and second control valves according to the first embodiment of the engine;
Fig. 8 is a front view of the valve unit of the foregoing first embodiment;
Fig. 9 is a front sectional view of the valve unit taken along line IX-IX of fig. 7 showing the first control valve in its fully closed position according to the foregoing first embodiment of the invention;
Fig. 10 is a front sectional view of the valve unit taken along line X-X of fig. 7 showing the second control valve in its fully closed position according to the foregoing first embodiment of the invention;
Fig. 11 is a diagrammatic figure to explain the operation of the control valves according to the foregoing first embodiment of the invention;
Fig. 12 is a diagrammatic side sectional view of the control valves to explain the operation of the foregoing first embodiment;
Fig. 13 is a diagrammatic figure to explain the operation of the engine of the first embodiment with the first and second control valves being in their closed position under engine operating conditions having low intake air requirements;
Fig. 14 is a diagrammatic figure to explain the operation of the engine of the first embodiment with the first control valves being opened and the second control valves being closed under engine operating conditions having mid-level intake air requirements;
Fig. 15 is a diagrammatic figure to explain the operation of the engine of the first embodiment with both control valves being in their fully opened position under engine operating conditions having high intake air requirements;
Fig. 16 is a sectional top view of the intake passage arrangement similar to fig. 3 of a second embodiment of the present invention;
Fig. 17 is a sectional front view of the intake passage arrangement of the foregoing second embodiment according to fig. 16;
Fig. 18 is a side view partially showing the valve unit according to a third embodiment of the present invention;
Fig. 19 is a sectional side view of the valve unit having a first and a second control valve according to the third embodiment of the invention shown in fig. 18;
Fig. 20 is a sectional front view taken along line XX-XX of fig. 18 according to the foregoing third embodiment;
Fig. 21 is a sectional front view taken along line XXI-XXI of fig. 18 of the foregoing third embodiment;
Fig. 22 is a sectional side view similar to fig. 19 of a modified embodiment of the control valves similar to the third embodiment of the engine;
Fig. 23 is a sectional front view of the intake passage arrangement with a cylindrical first control valve and a second control valve disposed therein according to a further embodiment of the present invention;
Fig. 24 is a sectional front view similar to fig. 23 of the intake passage arrangement showing the first control valve in its fully opened position according to the embodiment of fig. 23;
Fig. 25 is a sectional front view taken along line XX-XX of fig. 18 with the first control valve being fully closed according to the foregoing embodiment of figs. 24 and 25;
Fig. 26 is a sectional front view similar to fig. 25 taken along line XX-XX of fig. 18 with the first control valve being fully opened according to the foregoing embodiment according to figs. 23 to 25;
Fig. 27 is a graph showing the relationship between the open/close state of the first and second control valves and the operating ranges of the internal combustion engine according to the foregoing embodiments of the invention.

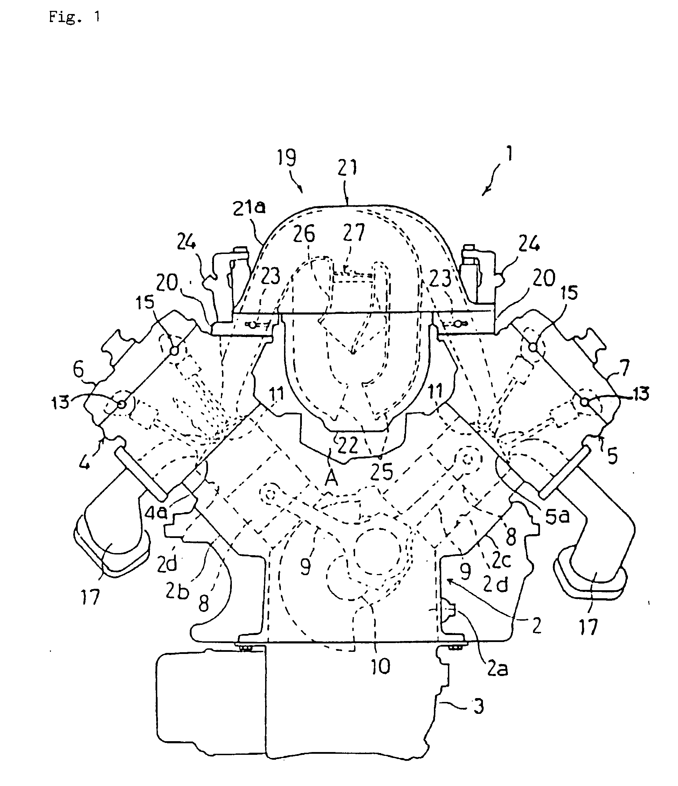

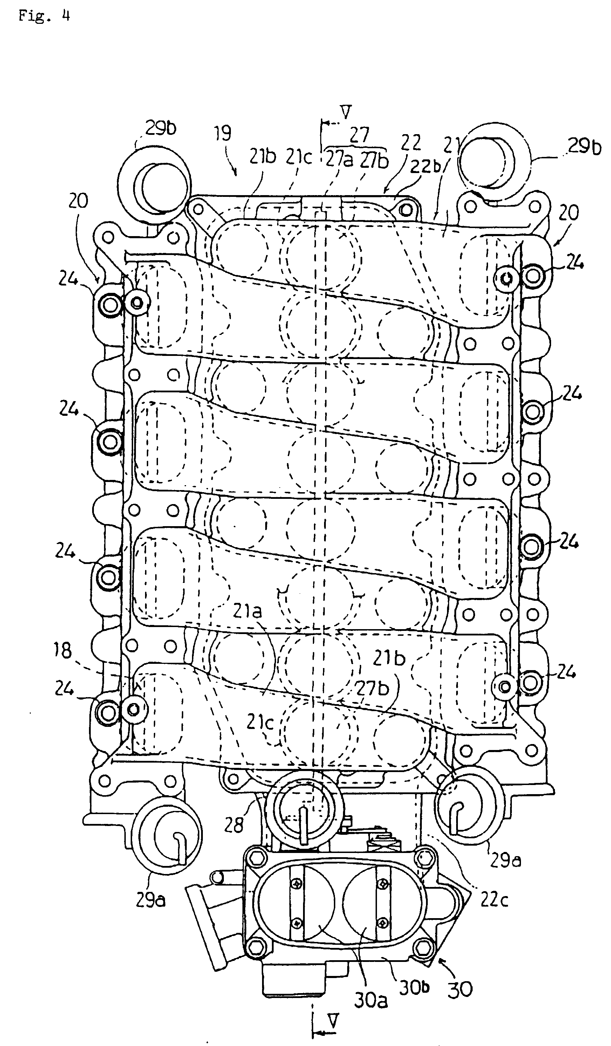

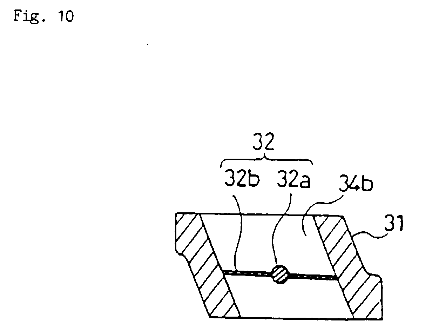

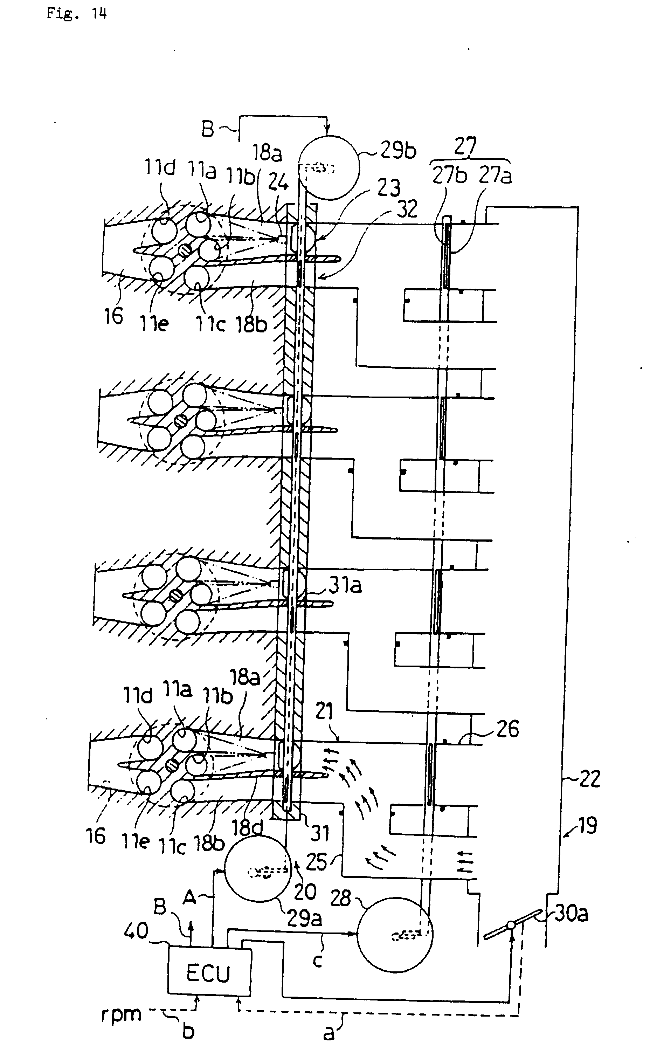

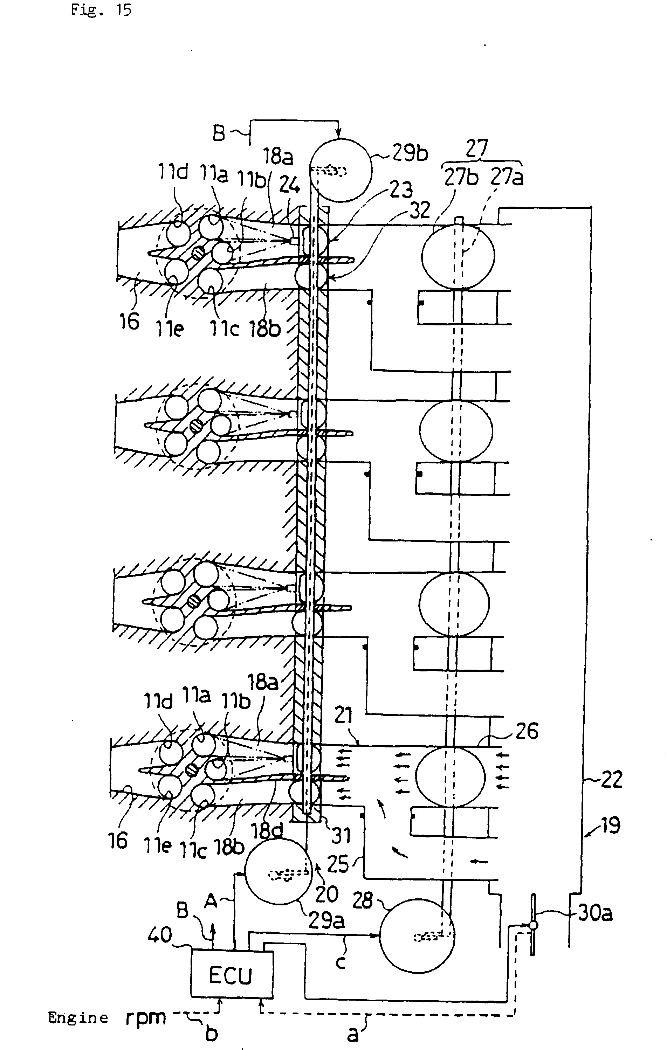

Figures 1 through 15 show a first embodiment of the air intake control device on a V-type engine, which incorporates the inventions described in Claims 1, 2 and 6. In the figures, 1 represents a water cooled four-cycle V-8 engine, and oil pan 3, which forms the bottom of the crank chamber, is attached at the skirt 2a, which forms the top of the crank chamber, of the cylinder block 2 of the engine 1. Left and right cylinder heads 4, 5 are attached by head bolts to the left and right cylinder units 2b, 2c, which form a V-bank of the foregoing cylinder block 2, and left and right head covers 6, 7 are fastened atop said left and right cylinder heads 4,5 on their respective top mating surfaces. With regard to the left and right references for the foregoing cylinder units and cylinder heads, they are left and right when viewed along the axial direction of the crankshaft (as shown in Figure 1). Also, since the internal dynamic valve mechanisms in the engine of this embodiment located in the left and right cylinder units 2b, 2c and the left and right cylinder heads 4, 5 are symmetrical on the left and right, the explanation that follows and the drawings in the figures are equally applicable to either side.

Each of the cylinder units 2b, 2c evinces a row of four cylinder bores (cylinders) 2d. Slidably inserted into said cylinder bores 2d are pistons 8, which are linked to the crankshaft 10 by means of connecting rods 9.

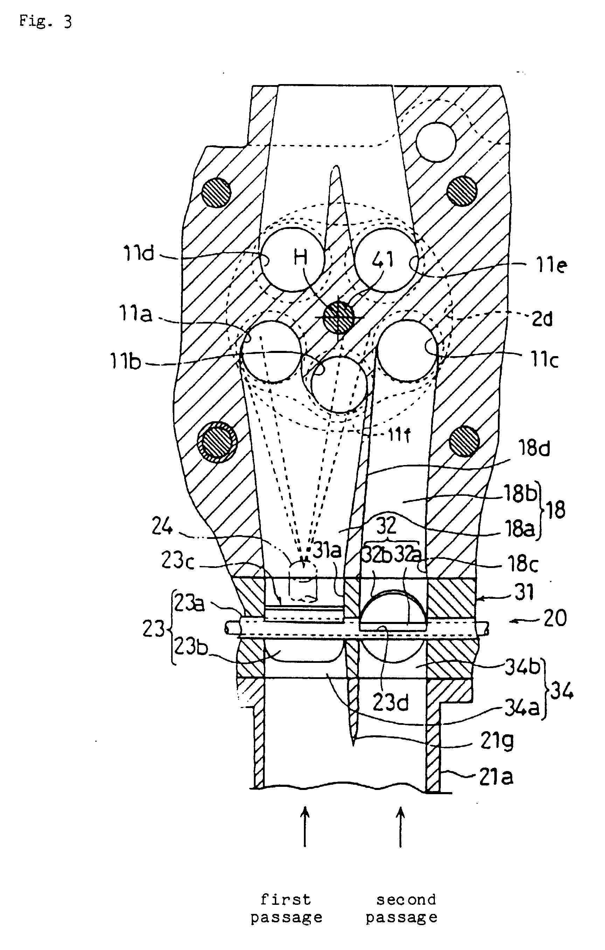

Four concave combustion areas 11 that form the respective combustion chambers have been placed on the mating surface 4a, 5a sides of the above mentioned left and right cylinder heads 4 , 5. Formed in said concave combustion areas 11 are a center air intake valve opening 11b and left and right air intake valve openings 11a, 11c, and two exhaust valve openings 11d, 11e. The center, left and right references for the foregoing valve openings correspond to the positions of these openings shown in Figure 3, and the same is true for the air intake passages. The centers of the above mentioned valve openings 11a-11e are approximately positioned upon a circle with the cylindrical axial line H as it center. Also, when the various valve openings 11a-11e are viewed in a direction perpendicular to the camshaft (the vertical position in Figure 3), the left and right air intake valve openings 11a and 11c are tilted toward the cylinder axis H more than the center air intake valve opening 11b, in other words, they tilt toward the cylinder axis. As a result, air intake flows introduced into the cylinder from the left and right air intake valve openings 11a, 11c are thereby directed toward the vicinity of the center of the cylinder.

Also, as shown in Figure 3, the diameter of the foregoing center air intake valve opening 11b is smaller than the diameters of the left and right air intake valve openings 11a, 11c. Thus, in the case of three air intake valve openings, when the air intake control valves in this embodiment are fully open during a period of high air intake, there is a natural tendency for more air to be fed from the center air intake valve opening, however, the smaller diameter of the center air intake opening in this embodiment moderates that tendency for the intake air to be centrally concentrated. Also, by fabricating the foregoing center air intake valve opening to be of smaller diameter, it is possible to form a squish area 11f at the outside mating surfaces 4a, 5a of said opening 11b. The result is the assured generation of the squish flow, which improves the air/fuel mixture.

Exhaust valves 12, 12 are located in the foregoing exhaust valve openings 11d, 11e, wherein said exhaust valves are driven open and closed by means of an exhaust camshaft 13. In addition, the center air intake valve 14b is installed in the foregoing center air intake valve opening 11b, and left and right air intake valves 14a are installed in the left and right air intake openings 11a, 11c. Said air intake valves 14a, 14b are driven open and closed by means of an air intake camshaft 15.

The foregoing exhaust valve openings 11d, 11e lead to the outside walls of cylinder banks 4, 5 by means of forked exhaust ports 16; said exhaust ports 16 have external connection openings 16a to which the exhaust manifold 17 is connected.

The foregoing air intake valve openings 11a-11c lead by means of air intake ports 18 (air intake passages) to the inner wall of each of the cylinder heads. A partitioning wall 18d in the foregoing air intake port 18 divides it into a left port (first passage/primary passage) 18a which services the foregoing center and left air intake openings 11b, 11a, and a right port (second passage/secondary passage) 18b which services the foregoing right air intake valve opening 11c.

The external connection opening 18c of the foregoing air intake port 18 is connected to the air intake system 19. This air intake system 19a is shaped so that it can be situated in the space A inside the V-bank formed by the foregoing left and right cylinder units 2b, 2c and the left and right cylinder heads 4, 5. The foregoing air intake system consists of a left and right air intake control valve unit 20, 20, which communicates with the foregoing external connection opening 18c, and arch-shaped air intake manifold 21 which spans said units 20, 20. A surge tank 22 is suspended below said air intake manifold.

The connection surfaces of the foregoing external connection openings 18c for the foregoing left and right cylinder heads lie within a single plane and are parallel to the crankshaft. The above mentioned air intake control valve units 20 are bolted to said connection surfaces. Each of said air intake control valve units 20 consists of "a"-valve body 31 which extends in the axial direction of the camshaft, of a second and first control valve (secondary, primary control valves) 32, 23 mounted in said valve body 31, and of diaphragm valves 29a, 29b which drive the control valves 32, 23.

The above mentioned valve body 31 extending in the axial camshaft direction evinces a square cylindrical shape, and for each cylinder, there is one valve-internal air intake passage 34 with a connection surface that communicates with the exhaust ports 18 of the cylinder heads 4, 5. This valve-internal air intake passage is divided by partitioning wall 31a into a left passage (first passage / primary passage) 34a that communicates with the foregoing port 18a, and a right passage (second passage, secondary passage) 34b that communicates with the foregoing left port 18b.

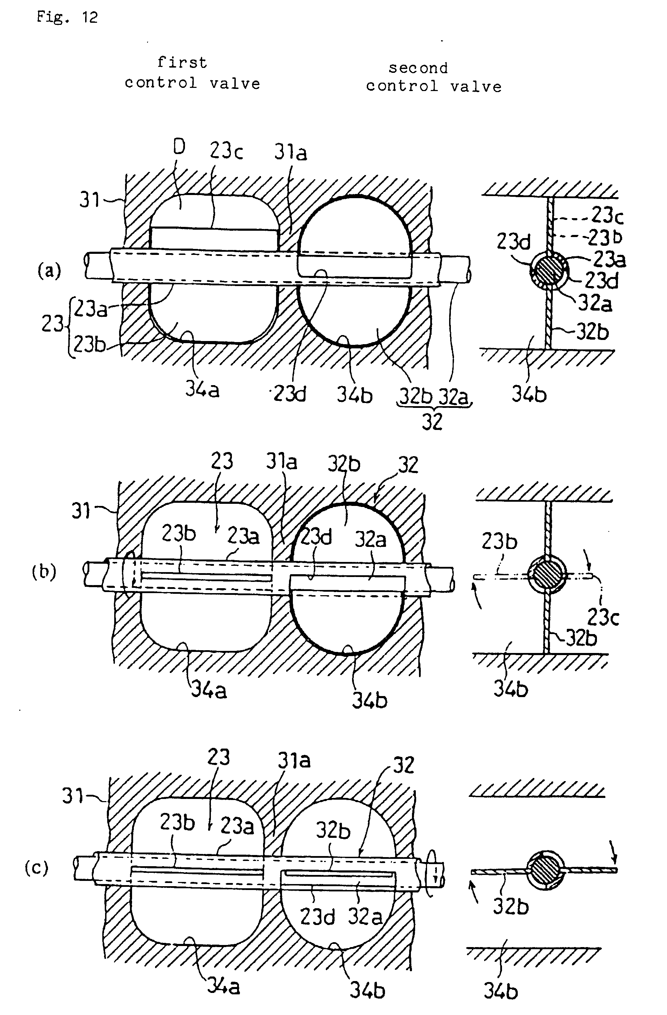

The right passage 34b evinces a vertical elliptical cross section, while the foregoing left passage 34a is wider than the right passage 34b and evinces a roughly rectangular cross section (see Figure 12). In addition, the shape of the foregoing partitioning wall 31a is such that it forms a continuous surface with partitioning wall 18d of the foregoing air intake port 18. As will be further described below, the partitioning wall 21g in the confluence passage 21a of the air intake manifold 21 also forms a continuous surface with the above mentioned partitioning wall 31a. Thus, when viewed as a whole, the partitioning walls of the foregoing air intake passage extend from the area of the air intake valve openings to the upstream end of the air intake control unit 20. This structure assures securing the required effective air intake pipe length during periods of low air-intake requirements.

It would also be possible to eliminate the partitioning wall 21g in the above mentioned confluence passage 21a. In such a case, wherein the partition wall length was set to reach the upstream end surface of the air intake valve unit 20, the air intake passage would enhance air intake performance during periods of high air-intake requirements.

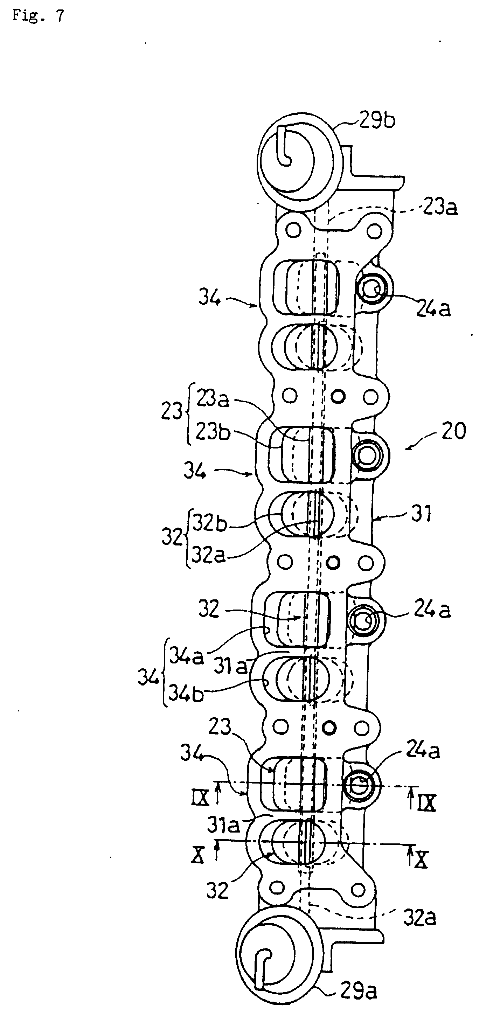

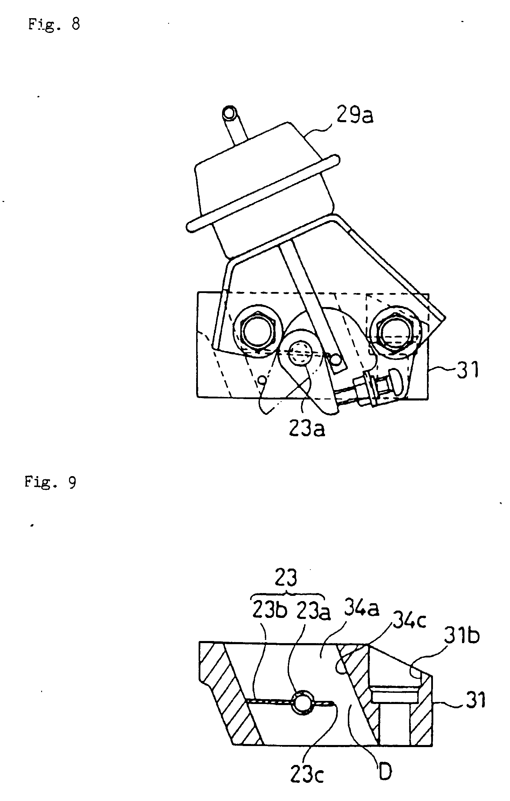

The foregoing first control valve 23 is configured so that the first valve plate 23b opening and closing the foregoing left passage 34a is affixed to a first valve shaft 23a made from tube stock. The foregoing first valve shaft 23a is inserted in and rotatably supported by the foregoing valve body 31 which is crossed in the axial direction with respect to the camshaft by the above mentioned left and right passages 34a, 34b. Also, the foregoing first valve plate 23b evinces a shape corresponding to the cross-section of the foregoing left passage 34a. Accordingly, when said valve plate is rotated into its fully closed position, a notch 23c in it creates a gap between it and the ceiling of the left passage 34a to form an opening D. Accordingly, when the foregoing first control valve 23 is rotated to the fully closed position (Figures 9, 12), most of the first passage 34a is closed off; only the opening D near the ceiling side remains open. Also, one end of the foregoing valve shaft 23a projects from valve body 31, upward in Figure 7. Said projecting end is connected to the above mentioned diaphragm valve 29b, which drives said first control valve 23 open and closed.

The above mentioned second control valve 32 consists of a second valve shaft 32a rotatably inserted into the foregoing first valve shaft 23a and of a second valve plate 32b affixed to said shaft 23a and conforming to the cross-section of the foregoing right passage 34b; in other words, it is shaped to tightly close said passage. A pair of notches 23d, 23d are also present in the foregoing first valve shaft 23a in the area of the foregoing second valve plate 32b is situated in order to prevent interference between said valve plate 32b and the first valve shaft 23a. Said notches each span an angle of rotation of 90°, and they permit independent rotation of each of the foregoing valve plates 23b, 32b over a 90 degree range.

In addition, fuel injection openings 24a have been formed which open into the ceiling 18e of the foregoing left port 18 in the above mentioned valve bodies 31, 31. Said fuel injection openings 24a are fed by fuel injection valves 24, one for each cylinder. Each of these fuel injection valves 24 is of the two-nozzle type, with the respective injection nozzles supplying the fuel injection directed toward the foregoing left and center air intake valve openings 11a, 11b.

This embodiment is one which assures the above described tumbling action, and therefore the description below will be for the relevant structure. The axial lines P for the spark plugs 41 have been tilted toward the outside of the bank (exhaust valve side) at an angle of θ3 with respect to the axial lines H of the cylinder bores. Correspondingly the axial lines V2, V1 of the air intake valves 14a, 14b are set at an angle of θ2 and θ1 with respect to the cylinder axis, and the axial lines V3 of the exhaust valves are tilted at a smaller angle θ4 with respect to the cylinder axis. Because of the upright position of the air intake valves 14a, 14b, the distance L1 from cylinder axis H to the exhaust camshaft 13 is greater than the distance L2 to the air intake camshaft 15.

Because the air intake valves 14a, 14b are more upright than usual with respect to the cylinder axis H, the zone near the inside of the bank in the cylinder head offers adequate space to form the air intake ports in an more upright position with respect to the cylinder axis. Thus, the air intake port 18 is formed as upright as is possible with respect to the cylinder axis H, and moreover, the notch 23c of the foregoing first air intake valve 23 generating the tumbling action, is positioned near the ceiling 34c and 18e.

When the foregoing second and first control valves 32, 23 are closed, the air intake is directed toward the ceiling 18e side of the left passage 18a, thereby strongly directing the airflow in the direction of the cylinder axis toward the center of the cylinder. In addition, the fuel from fuel injection valve 24 is injected to intersect the above mentioned directed air stream, thereby creating a good air/fuel mixture.

The above mentioned air intake manifold communicates with the foregoing valve bodies 31, 31 which extend at inward angles and upward in the space A between the V-banks and which bend from the confluence passage 21a to underneath the long passage 21b. Further, their cross-section inside said bend area is larger than the cross section of the foregoing long passage 21b, and further, they fork into the short passages 21c.

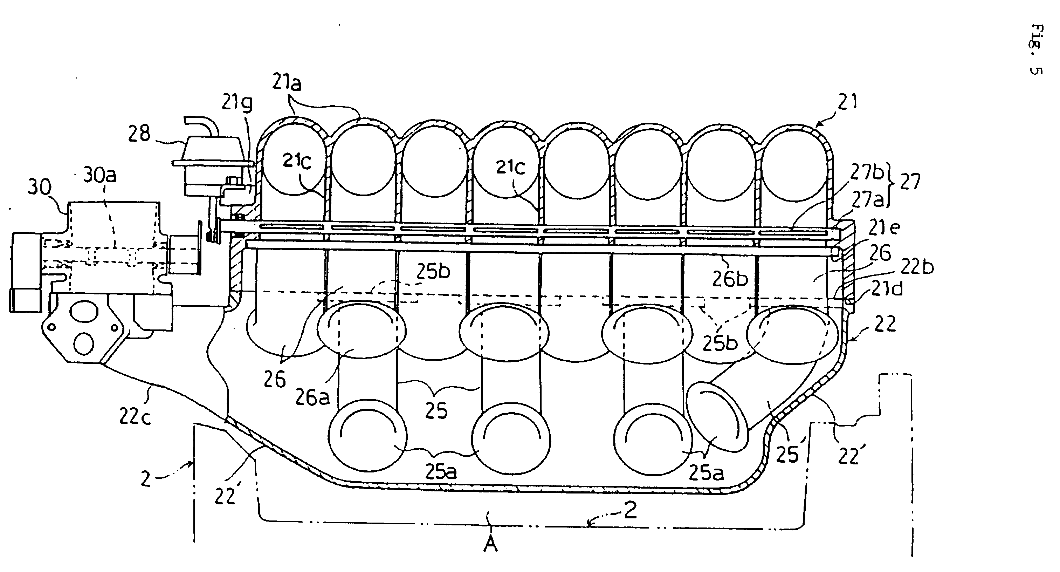

A long pipe 25 is connected to the bottom opening 21d of the foregoing long passage 21b, and a short pipe 26 is connected to the bottom opening 21e of the foregoing short passage 21c. The long pipe 25 and the short pipe 26 extend downward inside the above mentioned surge tank 22. The bottom openings 25a, 26a of the two pipes 25, 26 flare like trumpet horns and are directed toward the side wall 22a inside said surge tank 22 that is nearest the cylinders. Accordingly the various short pipes 21c run without gaps between them in the axial crankshaft direction (see Figure 5). It is further possible to use large-diameter short pipes 26a without interference between adjacent short pipes openings 26a.

The above described configuration employs a passage length on the foregoing long side that is roughly twice the length on the short side. Further, a relatively large space B is formed between the lower openings 25a, 26a of both of the foregoing pipes 25, 26 and the foregoing side wall 22a. As a result a good air flow is possible inside the surge tank in the axial crankshaft direction. The above mentioned long pipes 25 and short pipes 26 should be made from resin or pipe stock in order to lighten their weight.

The lower opening 21d of the long passage 21b of the foregoing air intake manifold 21 forms a continuous surface with the end surface of the lower opening 21f of the confluence passage 21a, while the lower end surface of the opening 21e of the short passage 21c is positioned above the lower end surface of the foregoing two lower end openings 21d, 21f. As will be described below, this arrangement prevents interference between the drive actuator for the valve switching the length of the air intake passage and the throttle valve.

All the above described short passages 21c are arrayed along a line perpendicular to a line parallel to the crankshaft. Running parallel to the crankshaft 10 and crossing these short passages 21c is a single valve shaft 27a, to which one valve plate 27b per cylinder is affixed, thereby constituting the air intake passage length-switching valve 27. The foregoing valve shaft 27a runs parallel to the valve shaft 23 of the left and right tumble switch valves 23.

The measured length from the openings 26a of the foregoing short passages 26 to the various air intake valve openings 11a-11c is set to a value corresponding to the action of the inertial supercharging effect in the high speed operating range of about 4600 rpm and above. Also, the measured length from the openings 25a of the foregoing long passages 25 to the above mentioned various air intake valve openings 11a-11c is set to a value corresponding to the action of the inertial supercharging effect in the low speed operation range of about 4600 rpm and under.

A swell is present on the bottom of the foregoing surge tank which evinces a bowl-shaped cross-section; its upper opening connection flange 22b is formed to be contiguous with the lower openings 21d, 21b of the foregoing air intake manifold 21, and they connect together with a tight seal. Also, an air introduction opening 22c is present on one end of the foregoing surge tank 22 in the axial crankshaft direction. Said air introduction opening 22c is connected to a throttle valve 30 in the throttle body 30b containing a pair of rotatable valve plates 30a.

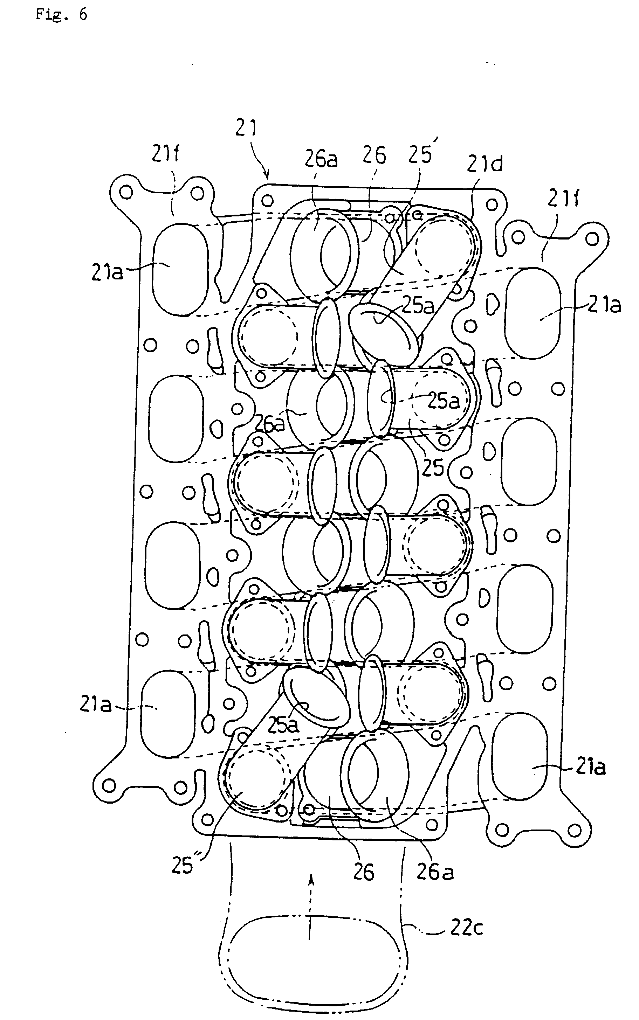

The intaken air entering through the foregoing air introduction opening 22c enters the surge tank, and then passes through the various long pipes 25 and short pipes 26 into the air intake manifold 21 from where it passes into the engine. In this embodiment with only one air introduction opening 22c at one end in the axial crankshaft direction for the multicylinder engine, some concern might be felt that variation in the rate of air intake may be experienced. As shown in Figure 6, however, this embodiment addresses this issue by directing the opening of the long pipe 25', which is most distant from the foregoing air introduction opening 22c, toward the air stream from that opening, and further by directing the opening of the long pipe 25'' nearest the air introduction opening 22c toward the downstream side of the air flow. This arrangement inhibits any unbalance in the amount of air intake. The above mentioned objective may be achieved as well by sloping the foregoing long pipes 25', 25", and as shown in Figure 5, by reducing the height of these long pipes 25' (25" is not shown). As a result, it is additionally possible to reduce the size of the fore and aft corners 22' of the surge tank, thereby reducing its space requirements.

The externally projecting end of the valve shaft 27a of the above mentioned air intake passage length-switching valve 27 uses a diaphragm valve 28 as the actuator. The output shaft of said diaphragm valve 28 connects to the foregoing valve shaft 27a. The foregoing diaphragm valve 28 and foregoing length-switching valve 27 are supported on the boss area 21g of the air intake manifold 21 which is made of the same material. In addition, the diaphragms 29a, 29b mentioned above and which drive the first and second control valves 32, 23 controlling the tumbling action are supported by a valve body 31 which is made of the same material. This arrangement prevents the possibility of assembly error affecting the various valves and diaphragms, thereby assuring their smooth opening and closing.

As described above, the air intake passage length-switching valve 27 is located above the air intake control unit 20, thereby avoiding any interference with the throttle body 30 which is located on the same side as said air intake passage length-switching valve 27.

Next, the operational effects of this embodiment will be described.

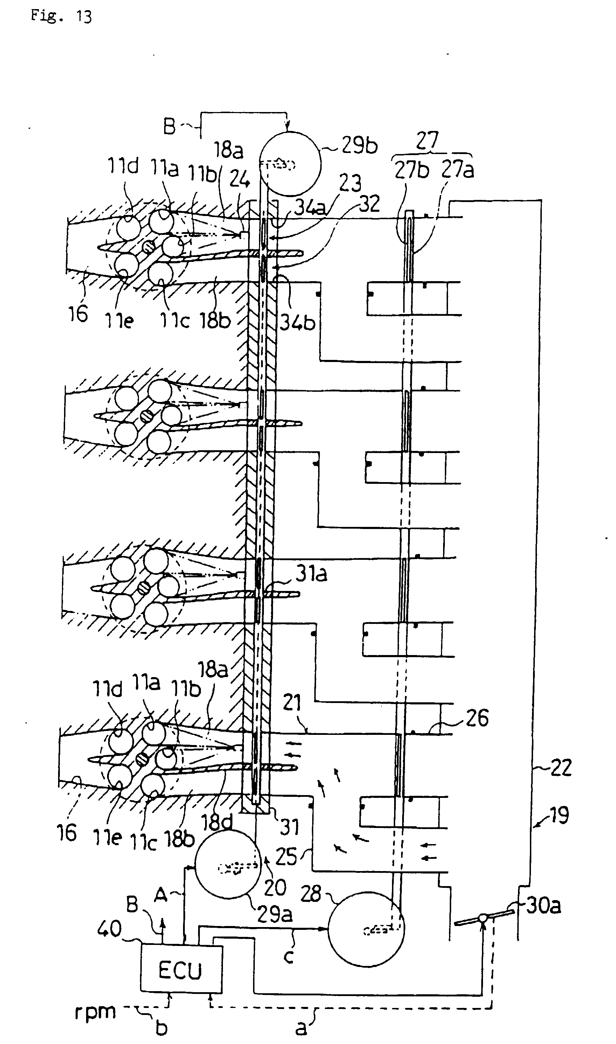

In Figure 13, 40 is an ECU controlling the opening and closing of the foregoing second and first control valves 32, 23, the air intake passage length-switching valve 27, the throttle valve 30a, etc. The ECU receives, as inputs, data on the aperture *a* of the throttle valve, the engine RPM *b* and other such engine operating parameters, and its outputs are control valve drive signals A, B, and the air intake passage length-switching signal C based upon the operational status of the engine.

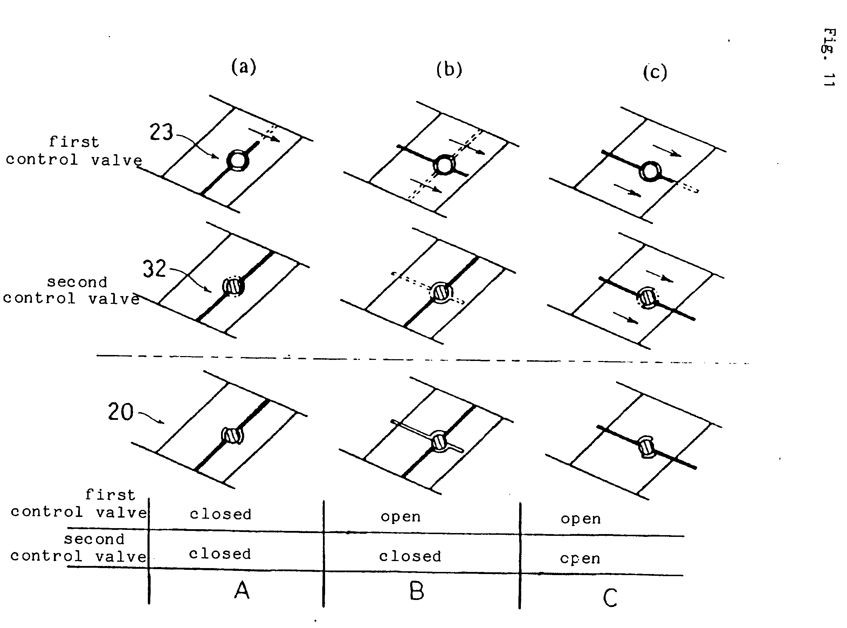

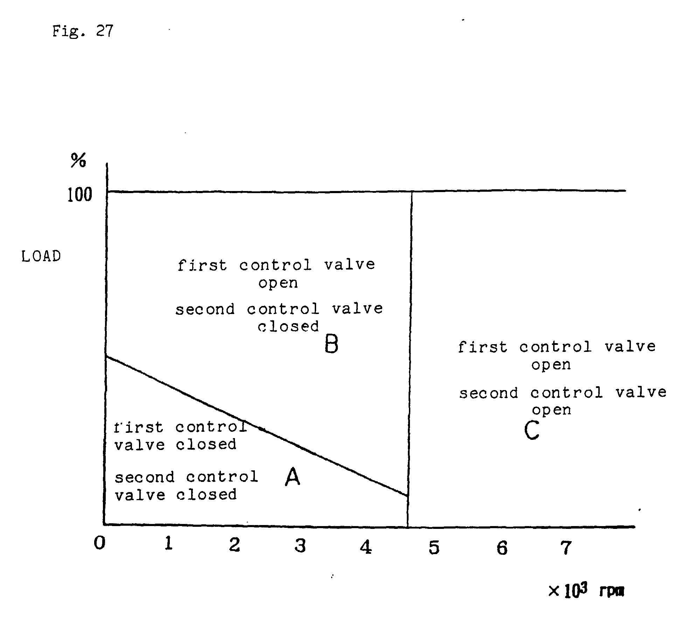

With regard to the engine RPM and load, range A shown in Figure 27 is the low air-intake requirement operating range wherein drive signals A and B cause the diaphragm valves 29a, 29b to rotate the first and second control valves 23, 32 into their fully closed position. The result, as shown in Figures 11(a), 12(a) and 13, is that the second control valve 32 closes the second passage 34b, and in addition, the first control valve 23 closes the first passage 34a. As a result, the air intake flow is directed toward the ceiling 18e side of the first port 18a through the opening D on the ceiling side of the first passage 34a, which introduces it into the cylinder in the axial direction to generate a tumble. In this structure, the above described tilted position of the spark plug 41 and of the air intake valves 14a, 14b allows the air intake port 18 to be more upright with respect to the cylinder axis H, and moreover, since the notch 23c of the first control valve is positioned near the ceiling of the passage, a stronger tumble is generated.

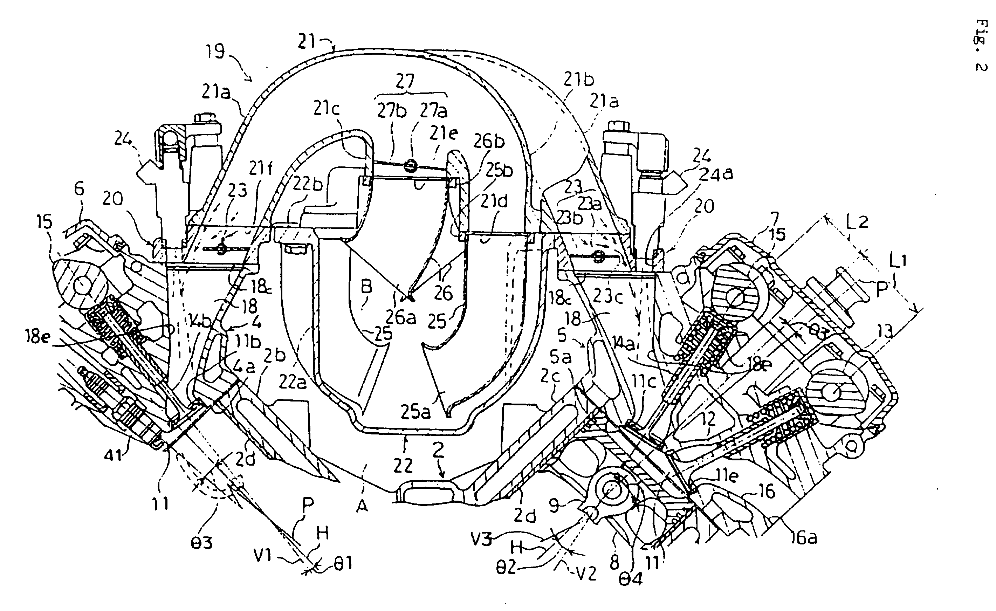

In addition, a switching signal C is also issued which causes the diaphragm valve 28 to switch the passage length-switch valve to the long passage configuration, and as shown in Figures 2 and 13, the short passages 31c are closed by the passage length switching valve 27. Therefore, the intake air is introduced into the cylinders via the long passages 21b through the long pipes 25. The result is an inertial supercharging effect in the low rpm range due to the air intake passage length, ensuring adequate supply of intake air even while the aforementioned tumble is being generated.

When the engine RPM and load are in the range B shown in Figure 27, namely the operating range for a mid-level air-intake requirement, as shown in Figures 11(b), 12(b) and (13), the first control valve 23 fully opens the first passage 34a. On the other hand, the second control valve 32 keeps the second passage 34b closed. The passage length-switching valve 27 maintains the passage length in the long configuration. Thereby the constriction in tumble generation is eliminated and at the same time a greater volume of air intake is assured.

When the engine RPM and load are in range C shown in figure 27, namely the operating range with a high air-intake requirement, as shown in Figures 11(c), 12(c) and (15), the second control valve 32 fully opens the second passage 34b and the passage length-switching valve 27 opens the short passage 21c so that the majority of the air in the high speed operation range passes through the short passage which affords the length for obtaining the inertial supercharging effect, while the remainder passes through the long passage into the cylinder to supply large quantities of intake air for high speed engine operations.

Thus, in the present embodiment, the air intake passage is partitioned into a second passage which services the right air intake valve opening 11c, and a first passage which services the center and left air intake valve openings. During periods of low air-intake requirements, the second passage is fully closed by means of the second control valve 32, while the first passage is only opened by the first control valve near the ceiling side at opening D, resulting in a high speed air flow through the first passage alone. In addition, since the foregoing opening D diverts the air toward the ceiling, the air flow is directed vertically into the cylinder to assure tumble-generation and to provide good combustion characteristics.

In this embodiment, in the operating range of low air-intake requirements, and the second and first control valves 32, 23 being fully closed, that is, when the valves have been rotated to produce a tumbling action, the passage length-switching valve 27 switches over to the long passages in order to obtain an inertial supercharging effect. This results in maintaining tumbling for good combustion characteristics while obtaining adequate air intake, to avoid a decline in output.

Because the valve shaft 32a of the second control valve 32 is inserted into the valve shaft 23a of the first control valve 23, two valve shafts have been used, but intake air resistance due to them when the valves are fully open has been held to an absolute minimum. Also, since notches 23d have been formed in the outside valve shaft 23a, each of the two valve plates 23b, 32b can be rotated independently of the other.

Because the second and first control valve 32, 23 valve shafts 32a, 23a, as well as the valve shaft 27 a for the switching valve being positioned parallel to the crankshaft, it is possible to open and close a plurality of passages with one valve, thereby affording a simplified design. As regards the valve shaft 27a for the air intake passage length-switching valve 27 located in the middle of the V bank, since it is positioned above the other two valve shafts 23a, 32a of air intake control valves 23, 32, it does not interfere with the throttle body.

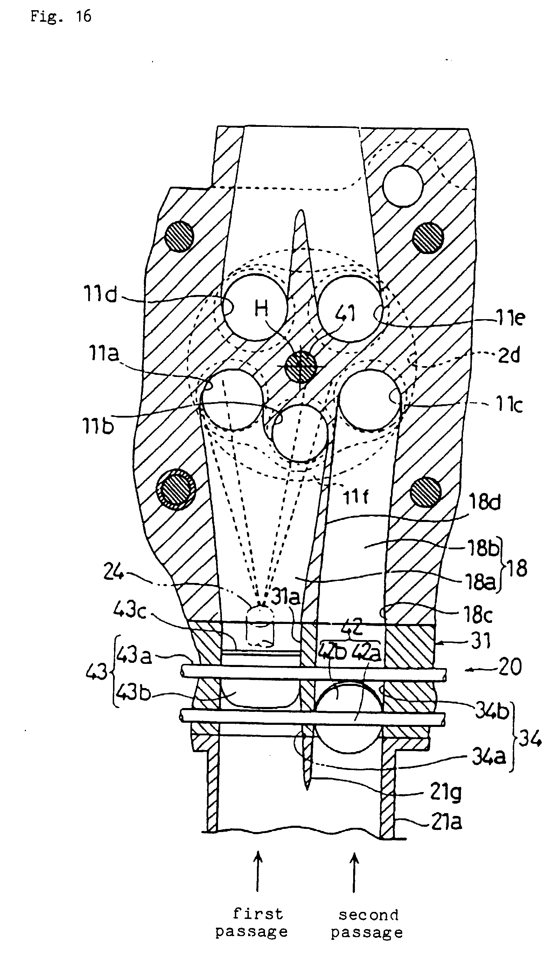

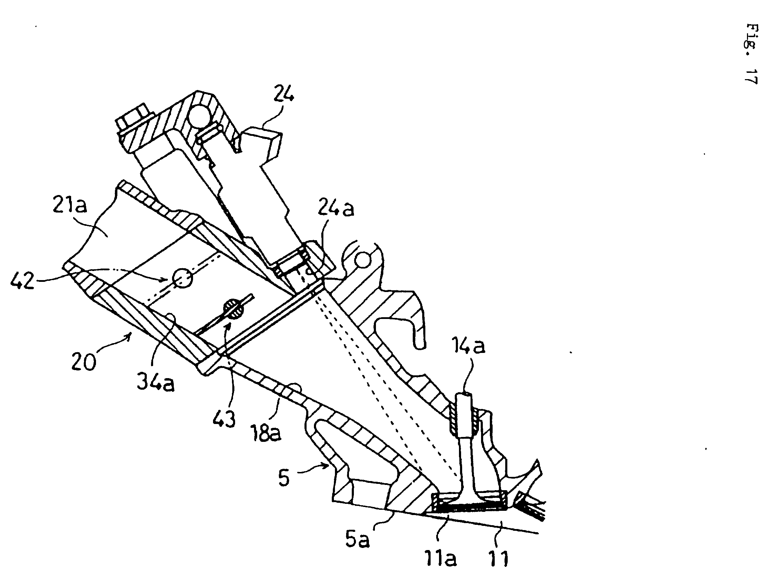

Figures 16 and 17 show a second embodiment of the air intake control device conforming to Claims 1, 3 and 6. In the figures, parts corresponding to those in Figures 1-15 bear the same reference numbers. In this second embodiment, the second and first valve shafts 42a, 43a for the second and first control valves 42, 43 are set parallel to each other, on the upstream and downstream sides respectively, but other structural aspects of the embodiment are similar to the first embodiment.

This second embodiments provides the same operational effects as the above-described effects of the first embodiment. Since the valve shafts 42a, 43a of this second embodiment have been independently positioned, there are no restrictions at all upon the rotation of the valve plates 43b, 42b.

Again, in this embodiment, namely in the case of two independently positioned valve-shafts, the first control valve 3, which generates the tumble, is positioned on the downstream side, making it possible to move said control valve 43 closer by that amount to the air-intake openings 11a, 11b.

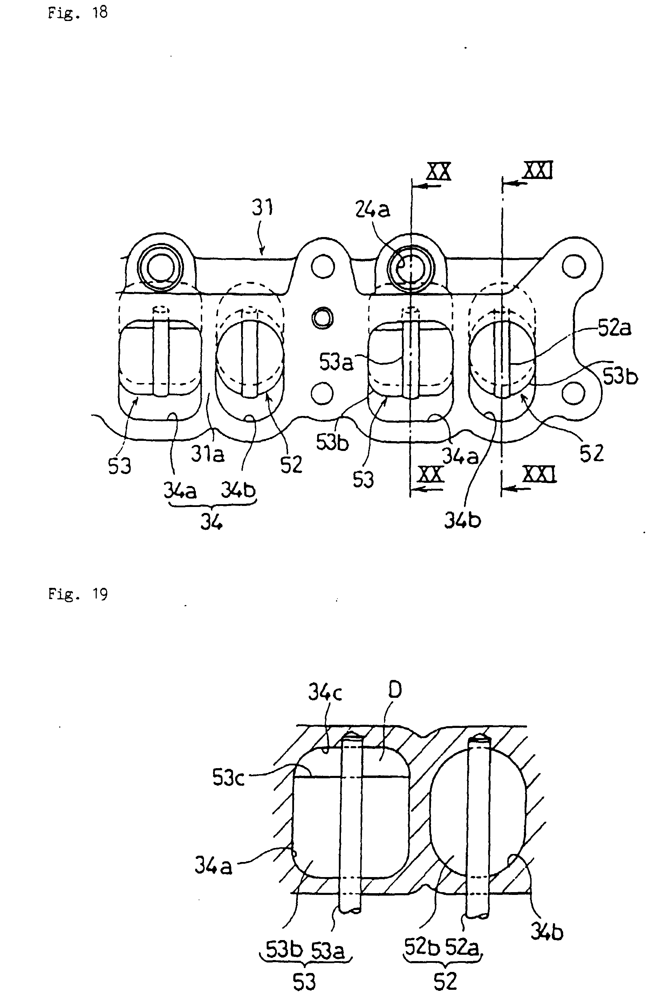

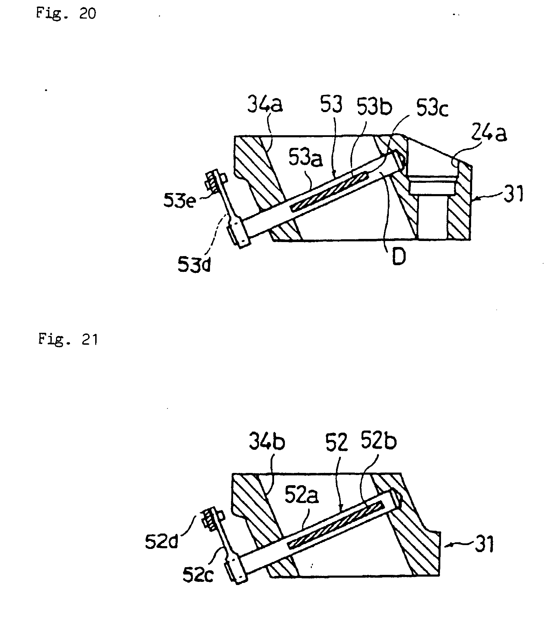

Figures 18 - 23 show an additional (third) embodiment of the air intake control device of this invention and relating to Claims 1, 4 and 6. Corresponding parts bear the same reference numbers as those in Figures 1 through 17. In this third embodiment, the second and first control valves 52, 53 rotate about a vertical shaft. To wit, the valve shafts 52a, 53a of the foregoing second and first control valves 52, 53 span the second and first passages 34b, 34a in a direction perpendicular to the camshaft, and the lower ends of the second and first valve shafts 52a, 53a project downward through the bottom of valve body 31.

The projecting ends of second valve shafts 52a for the foregoing various cylinders are attached respectively to the second arms 52c which are connected to second links 52d. One end of the second link 52d is connected tc a second diaphragm (not shown) which can drive it forward and back in the axial direction, thereby causing the second control valves to tightly close or fully open the second passages.

The first valve shafts 53a for the foregoing various cylinders are structured in a manner similar to the above described second valve shafts 52a, being connected to a first arm 53d and a first link 53e which can be driven forward and back by a first diaphragm to open and close the first passages 34a by means of the first control valves 53. Also, a notch 53c is present in the foregoing first valve plate 53b which can be rotated into the fully open position or into the fully closed position where the intake air stream is diverted toward the ceiling 34c through the opening d created by the notch.

This embodiment also provides operational effects that are similar to those of the above described first embodiment.

In addition, however, this third embodiment uses independent air intake control valves for the various air intake passages, thereby offering the advantage of requiring less dimensional accuracy among the various air passages for the various cylinders. To wit, in the first and second embodiments, wherein all the control valves shared a common valve shaft to provide smooth opening and closing, the rotating valve plates for the air intake passages for the various cylinders all had to be centered upon the same line, thereby requiring high dimensional accuracy. However, in this embodiment, the various air intake control valves can be rotated without hindrance even if the various air intake passages for the cylinders vary somewhat from being centered along the same line; this design requires only lower dimensional accuracy.

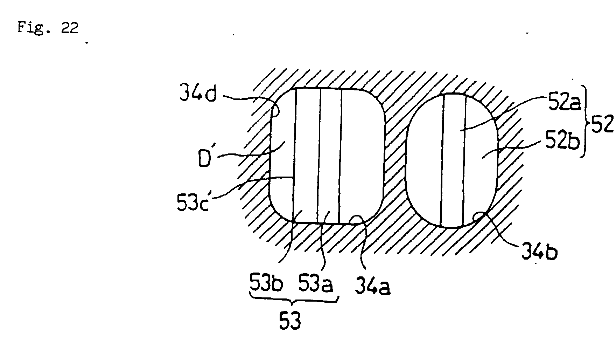

The explanation above for the foregoing first through third embodiments applied to notches 23c, 43c, and 53c being formed in the valve plates 23b, 43b, 53b of the first control valve so as to divert the intake air toward the ceiling side and to generate a tumbling action, however, it would be equally possible to divert said air so that it follows the inside circumferential surfaces of the cylinders and generates a horizontal swirl. This design could be implemented for example as shown in Figure 22 wherein the notch 53c' is present in the valve plate 53b so that the opening D' is formed between the inside surface of the outside wall of the air intake passage and the valve plate 53b.

During periods of low air-intake requirements, as shown in Figure 22, the second control valve 5 fully closes the second passage 34b, and in addition the first control valve 53 rotates into the closed position so that an opening D' is formed between the valve and the inside surface of the outside wall 34d of the first air intake passage 34a. Compared to the case in which no first and second valves are used, more of the intake air enters through the left air intake valve opening 11a, from where it is directed around the inside circumference of the cylinder to generate a swirl.

The notch 53c' shown in Figure 22 can of course be adapted to the above described first-and-second embodiment valve plates 23b and 43b, wherein the opening D' would be formed in a position similar to the one shown in Figure 22.

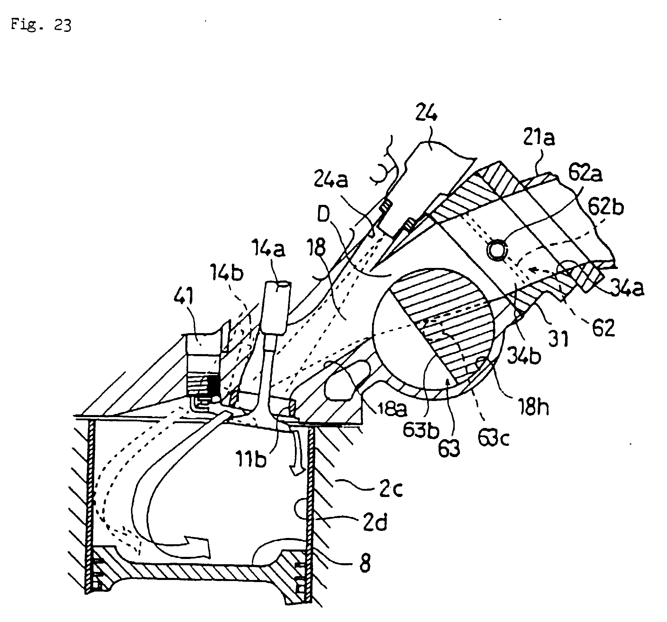

Figures 23-26 show another (fourth) embodiment of the invention relating to Claims 1, 5, 6. Parts corresponding to the ones in Figures 1 through 23 bear the same reference numbers. In this fourth embodiment, only a second control valve 62 which opens and closes the second passage 23b is contained in the valve body 31. This second control valve 62 is designed so that the valve plates 62b for the various cylinders are affixed to a common valve shaft 62a which opens and closes the foregoing second passages 34b. The protruding end of the foregoing valve shaft 62a is connected to a diaphragm which provides the drive for opening and closing the valves.

Valve holes 18h are present in a direction that intersects the axial camshaft direction in the bottom wall areas of the air intake ports 18 of the foregoing cylinder heads 4, 5 for the various cylinder second-and-first ports 18a, 18b. First control valves 63 are rotatably inserted into said valve holes 18h. These first valves 63 comprise a cylindrical valve unit 63a shaped to conform to the first valve port 18a for the various cylinders, and the valve units 63a for the various cylinders are linked by a small- diameter connecting shaft 63c.

A notched surface 63b formed in the foregoing valve units 63a is shaped so that it will form a continuous surface with the side surface and bottom surface of the foregoing first port 18a. The protruding ends of said first control valves 63 are connected to a servo motor or other drive means.

The diameter of the foregoing connecting shaft 63c is such that it will not be exposed inside the second port 18b, and a filler material 64 filling the gap between the inside surface of the second port 18b and the valve hole 18h is deposited on said connecting shaft 63c. This filler stock evinces a notch 64a which forms a continuous surface with the inside surface of the foregoing first port 18b, and it is affixed within the foregoing valve hole 18h. Accordingly, the above mentioned connecting shaft 63c is freely rotatable with respect to the foregoing filler material 64.

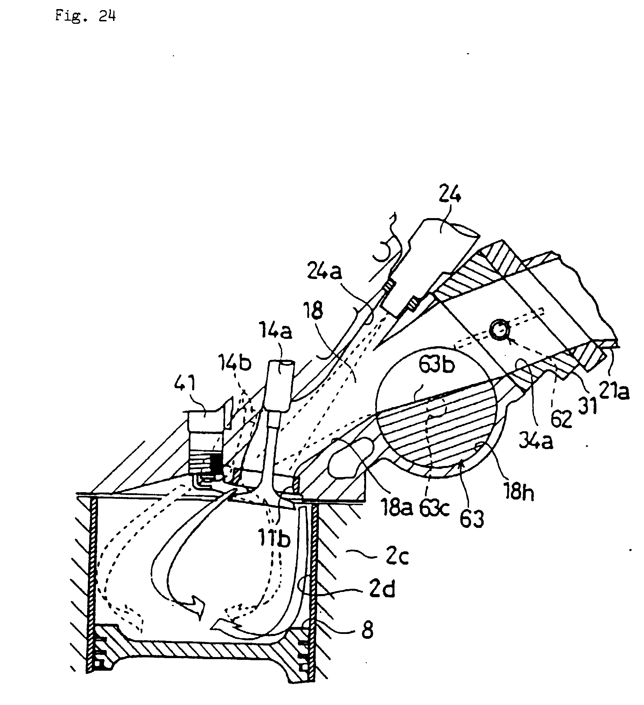

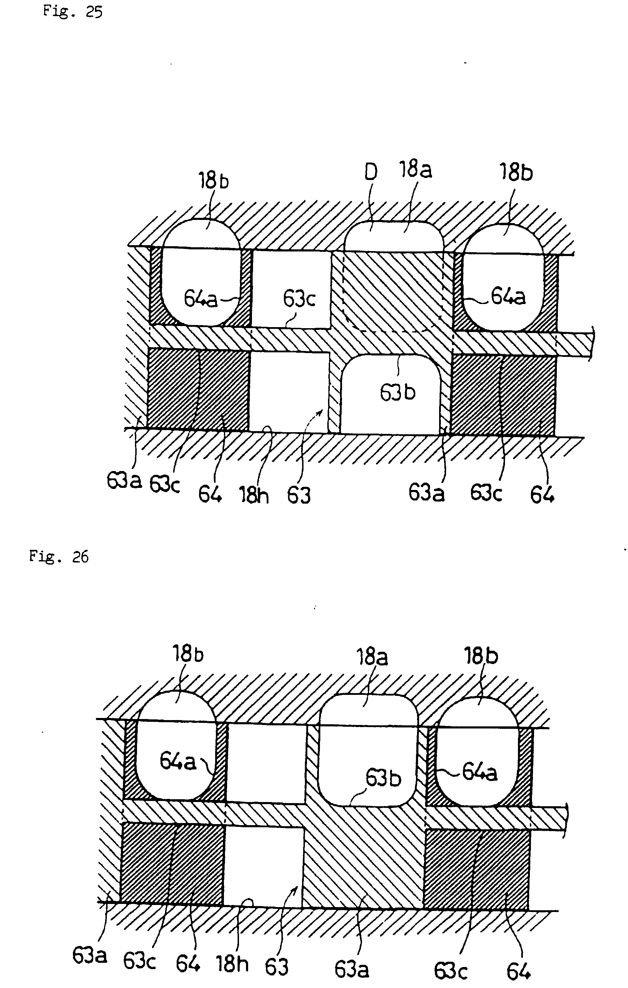

In this fourth embodiment, during periods of low air-intake requirements, the second control valve 62 closes the second passage 24b in the valve body 31 as shown in Figures 23, 25. As a result, the intake air is introduced into the cylinder after having been diverted through said opening D near the ceiling of the passage, thereby generating a tumble shown by both the solid and by the broken line arrows in Figure 23. In Figures 23 and 24 the flow through the center air intake valve opening is shown by the solid line and that through the left air intake valve opening by the broken line.

On the other hand, during periods of mid-range and high air-intake requirements, as shown in Figures 24, 26, the second control valve 63 opens the second passage 34b in valve body 31 and the first control valve 63 is rotated into the fully open position to bury it within the foregoing valve hole 18h. As a result, the notched surface 63b forms a continuous surface with the inside surface of the first port 18a. Any valve protrusion at all being eliminated inside the first port 18a, a tumble flow which is the reverse of that during the periods of low air-intake requirements is introduced through all the air intake valve openings (see the solid line arrow in Figure 24).

This fourth embodiment provides operational effects similar to those of the foregoing embodiments. But because the first control valve 63 in this embodiment lies completely buried within the wall of the air intake port when it is fully open, increased air intake resistance is avoided during periods of mid- to high requirements for air intake.

It would also be possible to consolidate the first control valve 63 and the filler material 64 into a single unit and to make such freely rotatable. In such a case, when the valve unit 63a closes the first port 18a, the filler area 64 will then close the second port 18b. At this point, the second control valve 62 would also be in the closed position, and the configuration will be problem-free. In such a design, notches 63b, 64a could be put into the cylindrical unit shaped to fit into the foregoing valve hole 18h, thereby greatly simplifying the structure of the first control valve 63.

### Effects of the Invention

As described above, the air intake control device for engines closes the second passage by means of the second control valve during periods of low air-intake requirements, and additionally, the first control valve closes off the first passage so that just the area near the ceiling or the outside wall is left open, thereby diverting the flow of intake air in the first passage toward the ceiling outside wall side to assure tumble or swirl generation to provide for good combustion characteristics.

The control device uses a coaxial shaft for the second and first control valves, thereby lowering air resistance when the valves are fully opened compared to the case of two separate shafts.

Alternatively, it uses independent shafts for the second and first control valves to eliminate any restrictions upon the angle of motion of the two valves and in addition, it positions the first control valve, which generates the tumble or swirl, on the downstream side, whereby the air flow will not be diminished by diversion toward the passage ceiling or outside area until it reaches the air intake valve opening.

A third embodiment positions the second and first control valve valve shafts perpendicularly to the camshaft and uses individual independent valve shafts for each cylinder, whereby, compared to the case of one common valve shaft being used for the various cylinders, this design lowers the required dimensional accuracy in positioning all the valve plates for each of the cylinders along a single straight line.

A further embodiment employs a cylindrical member as the first control valve which evinces a notched surface so that when fully opened, said valve is completely buried within the valve hole, thereby greatly reducing air intake resistance when the valve is fully open.

The intake passages have a configuration with a center air-intake valve opening and left and right side air intake valve openings on the left and right side of said center opening, the foregoing second passage being connected to the above mentioned right air intake valve opening, and where the foregoing first passage is connected to the above mentioned center air intake valve opening and left air intake valve opening. In addition, the second control valve is located in the foregoing second passage and the first control valve is located in the foregoing first passage so that during periods of low air-intake requirements, the intake air in the first passage is diverted toward the ceiling or the outside wall of the passage and enters the cylinders from the left air intake valve opening and the center air intake valve opening to assure generation of tumbling or swirling.

## Claims

1. Internal combustion engine comprising a cylinder unit (2, 4, 5) with at least one cylinder bore (2d) defined therein, and an intake passage arrangement (18, 34) with a plurality of intake valves (11a, 11b, 11c) associated therewith for supplying intake air to said cylinder bore (2d), said intake passage arrangement (18, 34) being provided with control valve means (23, 32; 43, 42; 53, 52; 63, 62) for controlling the flow of intake air towards said intake valves (11a, 11b, 11c), whereby said control valve means (23, 32; 43, 42; 53, 52; 63, 62) are provided for controlling the flow of intake air towards at least one of the intake valves (llc) separately from the flow of intake air towards at least another one of said intake valves (11a, 11b), wherein the intake passage arrangement (18, 34) comprises a first intake passage (34a, 18a) for supplying intake air towards a pair of intake valves (11a, 11b) and a second intake passage (34b, 18b) for supplying intake air towards another intake valve (11c) being divided from each other by a partitioning wall (21g), said control valve means includes a first control valve (23, 43, 53, 63) for controlling the intake air flow through said first intake passage (34a, 18a) and a second control valve (32, 42, 52, 62) for controlling the intake air flow through said second intake passage (34b, 18b),
**characterized in that** said pair of intake valves includes a first side intake valve (11a) and a center intake valve (11b) and said other intake valve is a second side intake valve (11c), a part (D, D') of the first intake passage (34a, 18a) is left open when the first control valve (23, 43, 53, 63) is in its fully closed position during engine operating conditions having low intake air requirements, and that under low intake air requirements the second control valve (32, 42, 52, 62) is in its fully closed position closing said second intake passage (34b, 18b) totally.

2. Internal combustion engine according to claim 1, **characterised in that** fuel injection means (24) are provided for injecting fuel into the intake passage arrangement (18, 34) towards at least one intake valve (11a, llb) separately from other intake valves (11c).

3. Internal combustion engine according to claim 2, **characterised in that** at least one of the control valves (32, 42, 52, 62) is adapted for controlling the intake air flow through a respective one of said intake passages (18b, 34b) separately from the intake air flow through other passages (34a, 18a).

4. Internal combustion engine according to claim 3, **characterised in that** said fuel injection means includes at least one injection valve (24) for injecting fuel into a respective one of said intake passages (34a, 18a).

5. Internal combustion engine according to at least one of claims 1 to 4, **characterised in that** said first and second intake passages (34a, 18a; 34b, 18b) being fully opened during engine operating conditions having high intake air requirements.

6. Internal combustion engine according to at least one of claims 1 to 5, **characterised in that** under engine operating conditions having mid-level intake air requirements, the first intake passage (34a, 18a) is fully opened, while the second intake passage (34b, 18b) is closed.

7. Internal combustion engine according to at least one of claims 1 to 6, **characterised in that** an injection valve means (24) is provided for injecting fuel into said first intake passage (34a, 18a), while the second intake passage (34b, 18b) is provided for supplying intake air only into the cylinder bore (2d).

8. Internal combustion engine according to at least one of claims 1 to 7, **characterised in that** the first and second control valves (23, 32, 43, 42, 53, 52) comprise a valve plate (23b, 32b, 43b, 42b, 53b, 52b) each, which is affixed to a valve shaft (23a, 32a, 43a, 42a, 53a, 52a) that is rotatably supported in the cylinder unit (2, 4, 5) and extends through the first and second intake passages (34a, 34b), respectively.

9. Internal combustion engine according to claim 8, **characterised in that** the first and second control valves (23, 32) are disposed aligned with each other, in particular such that the valve shaft (23a) of the first control valve (23) extends coaxially to the valve shaft (32a) of the second control valve (32), one of said valve shafts (32a) being rotatably received within a bore formed in the other valve shaft (23a) provided with a recess (23d) for the valve plate (32b) of said one valve shaft (32a).

10. Internal combustion engine according to claim 8, **characterised in that** the first and second control valves (43, 42) are disposed staggered with respect to each other, with the valve shafts (43a, 42a) extending in parallel with each other.

11. Internal combustion engine according to at least one of claims 1 to 10, **characterised in that** the first control valve (63) comprises a cylindrical valve unit (63a) having a notched surface (63b) that conforms to the cross-section of the first intake passage (34a, 18a), said cylindrical valve unit (63a) being rotatably supported, such that it is fully received in an intake passage wall of said first intake passage (18a), when it is in its fully opened position and that the first intake passage (18a) is totally closed except of an upper portion (D) left open, when said first control valve (63) is in its closing position.

12. Internal combustion engine according to at least one of claims 1 to 11, **characterised in that** first and second actuating means (29a, 29b) are provided for actuating the first control valve (23, 43, 53, 63) and the second control valve (32, 42, 52, 62), respectively, said actuating means (29a, 29b) being connected to a control unit (40) for controlling said actuating means (29a, 29b) in response to engine operating conditions.

13. Internal combustion engine according to at least one of claims 1 to 12, **characterised in that** the partitioning wall (21g) extends upstream from the control valves (23, 32; 43, 42; 53, 52; 63, 62) into an intake pipe.

14. Internal combustion engine according to at least one of claims 1 to 13, **characterised in that** the cylinder unit (2, 4, 5) comprises a plurality of cylinder bores (2d) disposed in line.

15. Internal combustion engine according to claim 14, **characterised in that** the first control valves (23, 43, 63) associated with the respective cylinders are affixed to a common valve shaft (23a, 43a, 63c), and the second control valves (32, 42, 62) associated with the respective cylinders are affixed to a common valve shaft (32a, 42a, 62a), said valve shafts extending in parallel with a camshaft direction.

16. Internal combustion engine according to at least one of claims 1 to 15, **characterised in that** each control valve (52, 53) is affixed to a separate valve shaft (53a, 52a), said valve shafts extending perpendicular to a camshaft direction.

17. Internal combustion engine according to at least one of claims 1 to 16, **characterised in that** the first and second control valve means (23, 32; 42, 43; 53, 52) are mounted in a control valve unit (20) detachably connected to the cylinder head (4, 5).

18. Internal combustion engine according to at least one of claims 1 to 17, **characterised in that** an air intake manifold (21) connected to the intake passage arrangement (34, 18) comprises intake pipes (21a) extending between the intake passages (34) to a surge tank (22), said intake pipes (21a) forking into short pipes (26) and into long pipes (25) for providing different intake passage lengths, and that a switch valve means (27) is provided for switching the communication between said intake pipes (21a), short pipes (26) and long pipes (25), respectively.

19. Internal combustion engine according to claim 18, **characterised in that** the switch valve means (27) comprises a common valve shaft (27a) with valve plates (27b) mounted thereon for the intake pipe of each cylinder, said valve shaft extending in parallel with valve shafts (23a, 32a, 43a, 42a) of the first and second control valves at a different level with respect thereto.

## Patentansprüche

1. Brennkraftmaschine, umfassend eine Zylindereinheit (2, 4, 5) mit zumindest einer Zylinderbohrung (2d), die darin definiert ist, und mit einer Einlaßkanalanordnung (18, 34), die eine Vielzahl von Einlaßventilen (11a, 11b, 11c) aufweist, die dieser für die Zuführung von Ansaugluft zu dieser Zylinderbohrung (2d) zugeordnet sind, wobei diese Einlaßkanalanordnung mit Steuerventileinrichtungen (23, 32; 43, 42; 53, 52; 63, 62) versehen ist zur Steuerung des Flusses der Ansaugluft in Richtung auf die Einlaßventile (11a, 11b, 11c) zu, wodurch diese Steuerventileinrichtungen (23, 32; 43, 42; 53, 52; 63, 62) vorgesehen sind zur Steuerung des Flusses der Ansaugluft in Richtung auf zumindest eines der Einlaßventile (11c) getrennt von dem Fluß der Ansaugluft in Richtung auf zumindest ein anderes dieser Ansaugventile (11a, 11b) zu, wobei die Einlaßkanalanordnung (18, 34) einen ersten Einlaßkanal (34a, 18a) aufweist zur Förderung der Ansaugluft in Richtung auf ein Paar von Einlaßventilen (11a, 11b) sowie einen zweiten Einlaßkanal (34b, 18b) enthält zur Förderung der Ansaugluft in Richtung auf ein anderes Einlaßventil (11c) und diese durch eine Trennwand (21g) voneinander getrennt sind, wobei die Steuerventileinrichtung ein erstes Steuerventil (23, 43, 53, 63) enthält zur Steuerung des Ansaugluftflusses durch diesen ersten Einlaßkanal (34a, 18a) und ein zweites Steuerventil (32, 42, 52, 62) enthält zur Steuerung des Ansaugluftflusses durch diesen zweiten Einlaßkanal (34b, 18b), **dadurch gekennzeichnet**, daß das Paar der Einlaßventile ein erstes Seiteneinlaßventil (11a) sowie ein Zentrumseinlaßventil (11b) enthält, und dieses andere Einlaßventil ein zweites Seiteneinlaßventil (11c) ist, daß ein Teil (D, D') des ersten Einlaßkanals (34a, 18a) offen gehalten wird, wenn das erste Steuerventil (23, 43, 53, 63) während Motorbetriebsbedingungen mit geringem Ansaugluftbedarf sich in seiner vollständig geschlossenen Position befindet, und daß unter geringem Ansaugluftbedarf das zweite Steuerventil (32, 42, 52, 62) sich in seiner vollständig geschlossenen Postition befindet und diesen zweiten Einlaßkanal (34b, 18b) vollständig schließt.

2. Brennkraftmaschine nach Anspruch 1, **dadurch gekennzeichnet,** daß Kraftstoffeinspritzeinrichtungen (24) angeordnet sind zum Einspritzen von Kraftstoff in die Einlaßkanalanordnung (18, 34) in Richtung auf zumindest ein Einlaßventil (11a, 11b), und zwar getrennt von dem anderen Einlaßventil (11c).

3. Brennkraftmaschine nach Anspruch 2, **dadurch gekennzeichnet,** daß zumindest eines der Steuerventile (32, 42, 52, 62) ausgelegt ist zur Steuerung des Ansaugluftflusses durch einen entsprechenden dieser Einlaßkanäle (18b, 34b), und zwar getrennt von dem Ansaugluftfluß durch die anderen Kanäle (34a, 18a).

4. Brennkraftmaschine nach Anspruch 3, **dadurch gekennzeichnet,** daß die Kraftstoffeinspritzeinrichtungen zumindest ein Einspritzventil (24) enthalten zum Einspritzen von Kraftstoff in einen entsprechenden von diesen Einlaßkanälen (34a, 18a).

5. Brennkraftmaschine nach zumindest einem der Ansprüche 1 bis 4, **dadurch gekennzeichnet**, daß die ersten und zweiten Einlaßkanäle (34a, 18a; 34b, 18b) während Motorbetriebsbedingungen mit einem hohen Ansaugluftbedarf vollständig geöffnet sind.

6. Brennkraftmaschine nach zumindest einem der Ansprüche 1 bis 5, **dadurch gekennzeichnet,** daß unter Motorbetriebsbedingungen mit einem mittleren Ansaugluftbedarf der erste Einlaßkanal (34a, 18a) vollständig geöffnet ist, während der zweite Einlaßkanal (34b, 18b) geschlossen ist.

7. Brennkraftmaschine nach zumindest einem der Ansprüche 1 bis 6, **dadurch gekennzeichnet,** daß eine Einspritzventileinrichtung (24) angeordnet ist zum Einspritzen von Kraftstoff in diesen ersten Einlaßkanal (34a, 18a), während der zweite Einlaßkanal (34b, 18b) angeordnet ist zur Förderung von Ansaugluft lediglich in die Zylinderbohrung (2d).

8. Brennkraftmaschine nach zumindest einem der Ansprüche 1 bis 7, **dadurch gekennzeichnet,** daß die ersten und zweiten Steuerventile (23, 32, 43, 42, 53, 52) jeweils eine Ventilplatte (23b, 32b, 43b, 42b, 53b, 52b) aufweisen, die an einem Ventilschaft (23a, 32a, 43a, 42a, 53a, 52a) befestigt ist, der in der Zylindereinheit (2, 4, 5) drehbar gelagert ist und sich durch diese ersten und zweiten Einlaßkanäle (34a, 34b) entsprechend erstreckt.

9. Brennkraftmaschine nach Anspruch 8, **dadurch gekennzeichnet,** daß die ersten und zweiten Steuerventile (23, 32) zueinander ausgerichtet angeordnet sind, insbesondere derart, daß der Ventilschaft (23a) des ersten Steuerventils (23) sich koaxial zu dem Ventilschaft (32a) des zweiten Steuerventils (32) erstreckt, wobei einer dieser Ventilschäfte (32a) drehbar in einer Bohrung aufgenommen ist, die in dem anderen Ventilschaft (23a) ausgeformt ist, der mit einer Aussparung (23d) für die Ventilplatte (32b) dieses einen Ventilschafts (32a) versehen ist.

10. Brennkraftmaschine nach Anspruch 8, **dadurch gekennzeichnet,** daß die ersten und zweiten Steuerventile (43, 42) zueinander gestaffelt angeordnet sind, wobei die Ventilschäfte (34a, 42a) sich parallel zueinander erstrecken.

11. Brennkraftmaschine nach zumindest einem der Ansprüche 1 bis 10, **dadurch gekennzeichnet,** daß das erste Steuerventil (63) eine zylindrische Ventileinheit (63a) mit einer ausgeklinkten Oberfläche (63b) aufweist, die mit dem Querschnitt des ersten Einlaßkanals (34a, 18a) übereinstimmt, wobei diese zylindrische Ventileinheit (63a) derart drehbar gelagert ist, daß sie vollständig in einer Einlaßkanalwandung von diesem ersten Einlaßkanal (18a) aufgenommen ist, wenn sie sich in ihrer vollständig geöffneten Position befindet, und daß der erste Einlaßkanal (18a) bis auf einen offengelassenen oberen Abschnitt (D) vollständig geschlossen ist, wenn sich dieses erste Steuerventil (63) in seiner Schließposition befindet.

12. Brennkraftmaschine nach mindestens einem der Ansprüche 1 bis 11, **dadurch gekennzeichnet,** daß erste und zweite Stelleinrichtungen (29a, 29b) vorgesehen sind zum Betätigen des ersten Steuerventils (23, 43, 53, 63) bzw. des zweiten Steuerventils (32, 42, 52, 62), wobei diese Stelleinrichtungen (29a, 29b) an einer Steuereinheit (40) angeschlossen sind zur Steuerung der Stelleinrichtungen (29a, 29b) in Abhängigkeit von Motorbetriebsbedingungen.

13. Brennkraftmaschine nach zumindest einem der Ansprüche 1 bis 12, **dadurch gekennzeichnet,** daß die Trennwand (21g) sich stromaufwärts von den Steuerventilen (23, 32; 43, 42; 53, 52; 63, 62) in ein Ansaugrohr hinein erstreckt.

14. Brennkraftmaschine nach zumindest einem der Ansprüche 1 bis 13, **dadurch gekennzeichnet,** daß die Zylindereinheit (2, 4, 5) eine Vielzahl von in Reihe angeordneten Zylinderbohrungen (2d) aufweist.

15. Brennkraftmaschine nach Anspruch 14, **dadurch gekennzeichnet**, daß die ersten Steuerventile (23, 43, 63), die den entsprechenden Zylindern zugeordnet sind, an einem gemeinsamen Ventilschaft (23a, 43a, 63c) befestigt sind, und daß die zweiten Steuerventile (32, 42, 62), die den entsprechenden Zylindern zugeordnet sind, auf einem gemeinsamen Ventilschaft (32a, 42a, 62a) befestigt sind, wobei sich diese Ventilschäfte parallel zu einer Nockenwellendchtung erstrecken.

16. Brennkraftmaschine nach mindestens einem der Ansprüche 1 bis 15, **dadurch gekennzeichnet,** daß jedes Steuerventil (52, 53) an einem getrennten Ventilschaft (53a, 52a) befestigt ist, wobei sich diese Ventilschäfte senkrecht zu einer Nockenwellenrichtung erstrecken.

17. Brennkraftmaschine nach zumindest einem der Ansprüche 1 bis 16, **dadurch gekennzeichnet,** daß die ersten und zweiten Steuerventileinrichtungen (23, 32; 42, 43; 53, 52) in einer Steuerventileinheit (20) montiert sind, die an dem Zylinderkopf (4, 5) abnehmbar befestigt ist.

18. Brennkraftmaschine nach zumindest einem der Ansprüche 1 bis 17, **dadurch gekennzeichnet**, daß ein Luftansaugkrümmer (21), der an der Einlaßkanalanordnung (34, 18) angeschlossen ist, Ansaugröhren (21a) enthält, die sich zwischen den Einlaßkanälen (34) zu einem Druckausgleichsbehälter (22) erstrecken, wobei sich diese Einlaßröhren (21a) in kurze Röhren (26) und in lange Röhren (25) aufgaben, um unterschiedliche Einlaßkanal-Längen zur Verfügung zu stellen, und daß eine Schaltventileinrichtung (27) vorgesehen ist zum Schalten der Verbindung zwischen diesen Einlaßröhren (21a), den kurzen Röhren (26) bzw. den langen Röhren (25).

19. Brennkraftmaschine nach Anspruch 18, **dadurch gekennzeichnet,** daß die Schaltventileinrichtung (27) einen gemeinsamen Ventilschaft (27a) aufweist mit Ventilplatten (17b), die darauf für die Einlaßröhre von jedem Zylinder montiert sind, wobei dieser Ventilschaft sich parallel zu den Ventilschäften (23a, 32a, 43a, 42a) von diesen ersten und zweiten Steuerventilen bezüglich diesen auf einem unterschiedlichen Niveau erstreckt.

## Revendications

1. Moteur à combustion interne comprenant un bloc de cylindres (2, 4, 5) comportant au moins un alésage de cylindre (2d) défini dans celui-ci, et un aménagement de passages d'admission (18, 34) comportant une pluralité de soupapes d'admission (11a, 11b, 11c) associées à celui-ci destinées à alimenter en air à l'admission ledit alésage de cylindre (2d), ledit aménagement de passages d'admission (18, 34) comportant des moyens de clapet de commande (23, 32; 43, 42, 53, 52; 63, 62) destinés à contrôler le débit de l'air à l'admission vers lesdites soupapes d'admission (11a, 11b, 11c), par lesquels lesdits moyens de clapet de commande (23, 32; 43, 42, 53, 52; 63, 62) sont destinés à contrôler le débit de l'air à l'admission vers au moins l'une des soupapes d'admission (11c) de manière indépendante du débit de l'air à l'admission dirigé sur au moins une autre des dites soupapes d'admission (11a, 11b), dans lequel l'aménagement de passages d'admission (18, 34) comprend un premier passage d'admission (34a, 18a) destiné à alimenter en air une paire de soupapes d'admission (11a, 11b) et un second passage d'admission (34b, 18b) destiné à alimenter en air une autre soupape d'admission (11c) qui sont séparées les unes de l'autre par une paroi de séparation (21g), lesdits moyens de clapet de commande comprennent un premier clapet de commande (23, 43, 53, 63) destiné à contrôler le débit de l'air à l'admission dans ledit premier passage d'admission (34a, 18a) et un second clapet de commande (32, 42, 52, 62) destiné à contrôler le débit de l'air à l'admission dans ledit second passage d'admission (34b, 18b),
caractérisé en ce que
ladite paire de soupapes d'admission comprend une première soupape d'admission latérale (11a) et une soupape d'admission centrale (11b) et en ce que ladite autre soupape d'admission est une seconde soupape d'admission latérale (11c), qu'une partie (D, D') du premier passage d'admission (34a, 18a) est laissé ouvert lorsque le premier clapet de commande (23, 43, 53, 63) est en position de fermeture totale dans des conditions de fonctionnement du moteur qui ont de faibles exigences en air à l'admission, et en ce que sous faibles exigences en air à l'admission le second clapet de commande (32, 42, 52, 62) est en position de fermeture totale, fermant totalement ledit second passage d'admission (34b, 18b).

2. Moteur à combustion interne selon la revendication 1, caractérisé en ce que des moyens d'injection de carburant (24) sont aménagés pour injecter du carburant à l'intérieur de l'aménagement des passages d'admission (18, 34) vers au moins l'une des soupapes d'admission (11a, 11b) indépendamment de l'autre soupape d'admission (11c).

3. Moteur à combustion interne selon la revendication 2, caractérisé en ce qu'au moins l'un des clapets de commande (32, 42, 52, 62) est adapté pour contrôler le débit de l'air à l'admission dans l'un des dits passages d'admission respectifs (18b, 34b) indépendamment du débit d'air à l'admission dans les autres passages (34a, 18a).

4. Moteur à combustion interne selon la revendication 3, caractérisé en ce que lesdits moyens d'injection de carburant comprennent au moins un clapet d'injection (24) destiné à injecter du carburant à l'intérieur de l'un des dits passages d'admission respectifs (34a, 18a).

5. Moteur à combustion interne selon au moins l'une des revendications 1 à 4, caractérisé en ce que lesdits premier et second passage d'admission (34a, 18a; 34b, 18b) sont totalement ouverts dans des conditions de fonctionnement du moteur qui exigent une admission d'air importante.

6. Moteur à combustion interne selon au moins l'une des revendications 1 à 5, caractérisé en ce que dans des conditions de fonctionnement du moteur qui exigent une admission d'air à un niveau moyen, le premier passage d'admission (34a, 18a) est totalement ouvert, alors que le second passage d'admission (34b, 18b) est fermé.

7. Moteur à combustion interne selon au moins l'une des revendications 1 à 6, caractérisé en ce que des moyens de clapet d'injection (24) sont destinés à injecter du carburant à l'intérieur du dit premier passage d'admission (34a, 18a), alors que le second passage d'admission (34b, 18b) est destiné à fournir de l'air à l'admission uniquement à l'intérieur de l'alésage du cylindre (2d).

8. Moteur à combustion interne selon au moins l'une des revendications 1 à 7, caractérisé en ce que les premier et second clapets de commande (23, 32, 43, 42, 53, 52) comprennent chacun une plaque de clapet (23b, 32b, 43b, 42b, 53b, 52b), qui est fixée sur un axe de clapet (23a, 32a, 43a, 42a, 53a, 52a) qui est supporté en rotation dans le bloc de cylindres (2, 4, 5) et qui s'étend respectivement au travers des premier et second passages d'admission (34a, 34b).

9. Moteur à combustion interne selon la revendication 8, caractérisé en ce que les premier et second clapets de commande (23, 32) sont disposés en alignement l'un par rapport à l'autre, en particulier de sorte que l'axe de clapet (23a) du premier clapet de commande (23) s'étende de manière coaxiale à l'axe de clapet (32a) du second clapet de commande (32), l'un des dits axes de clapet (32a) étant reçu en rotation à l'intérieur d'un alésage formé dans l'autre axe de clapet (23a) comportant un retrait (23d) destiné à recevoir la plaque de clapet (32b) du dit axe de clapet (32a).

10. Moteur à combustion interne selon la revendication 8, caractérisé en ce que les premier et second clapets de commande (43, 42) sont disposés de manière décalée l'un par rapport à l'autre, les axes de clapet (43a, 42a) s'étendant parallèlement l'un par rapport à l'autre.

11. Moteur à combustion interne selon au moins l'une des revendications 1 à 10, caractérisé en ce que le premier clapet de commande (63) comprend un ensemble cylindrique de clapet (63a) ayant une surface entaillée (63b) qui est conforme à la section transversale du premier passage d'admission (34a, 18a), ledit ensemble cylindrique de clapet (63a) étant supporté en rotation, de sorte qu'il est totalement reçu dans une paroi de passage d'admission du dit premier passage d'admission (18a), lorsqu'il est dans sa position de totale ouverture et que le premier passage d'admission (18a) est fermé en totalité à l'exception d'une partie supérieure (D) laissée ouverte, lorsque ledit premier clapet de commande (63) est dans sa position de totale fermeture.

12. Moteur à combustion interne selon au moins l'une des revendications 1 à 11, caractérisé en ce que des premiers et des seconds moyens de commande (29a, 29b) sont fournis afin de commander respectivement le premier clapet de commande (23, 43, 52, 63) et le second clapet de commande (32, 42, 52, 62), lesdits moyens de commande (29a, 29b) étant connectés à une unité de contrôle (40) destinée à contrôler lesdits moyens de commande (29a, 29b) en réponse aux conditions de fonctionnement du moteur.

13. Moteur à combustion interne selon au moins l'une des revendications 1 à 12, caractérisé en ce que la paroi de séparation (21g) s'étend en amont des clapets de commande (23, 32; 43, 42; 53, 52; 63, 62) à l'intérieur d'une tubulure d'admission.

14. Moteur à combustion interne selon au moins l'une des revendications 1 à 13, caractérisé en ce que le bloc de cylindres (2, 4, 5) comprend une pluralité d'alésages de cylindre (2d) disposés en ligne.

15. Moteur à combustion interne selon la revendication 14, caractérisé en ce que les premiers clapets de commande (23, 43, 63) associés aux cylindres respectifs sont fixés sur un arbre de clapet commun (23a, 43a, 63c), et que les seconds clapets de commande (32, 42, 62) associés aux cylindres respectifs sont fixés sur un arbre de clapet commun (32a, 42a, 62a), lesdits arbres de clapet s'étendant de manière parallèle à l'arbre à cames.

16. Moteur à combustion interne selon au moins l'une des revendications 1 à 15, caractérisé en ce que chaque clapet de commande (52, 53) est fixé sur un axe de clapet séparé (53a, 52a), lesdits axes de clapet s'étendant de manière perpendiculaire à l'arbre à cames.

17. Moteur à combustion interne selon au moins l'une des revendications 1 à 16, caractérisé en ce que les premiers et les seconds moyens de clapet de commande (23, 32; 43, 42; 53, 52) sont montés dans une unité de commande de clapet (20) connectée de manière amovible à la culasse (4, 5).

18. Moteur à combustion interne selon au moins l'une des revendications 1 à 17, caractérisé en ce qu'un collecteur d'admission d'air (21) connecté à l'aménagement de passage d'admission (34, 18) comprend des tubulures d'admission (21a) s'étendant entre les passages d'admission (34) vers un réservoir de régulation (22), lesdites tubulures d'admission (21a) se divisant en tubulures courtes (26) et en tubulures longues (25) destinées à fournir différentes longueurs de passage d'admission, et en ce que des moyens de clapet de commutation (27) sont fournis afin de commuter la communication respectivement entre lesdites tubulures d'admission (21a), les tubulures courtes (26) et les tubulures longues (25).

19. Moteur à combustion interne selon la revendication 18, caractérisé en ce que les moyens de clapet de commutation (27) comprennent un arbre de clapet commun (27a) comportant des plaques de clapet (27b) montées sur celui-ci pour la tubulure d'admission de chaque cylindre, ledit arbre de clapet s'étendant parallèlement par rapport aux arbres de clapet (23a, 32a, 43a, 42a) des premiers et des seconds clapets de commande à un niveau différent par rapport à ceux-ci.
